(19) Europäisches Patentamt
European Patent Office
Office européen des brevets

(11) EP 2 160 440 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**04.03.2020 Patentblatt 2020/10**

(45) Hinweis auf die Patenterteilung:
**21.03.2012 Patentblatt 2012/12**

(21) Anmeldenummer: **08774149.2**

(22) Anmeldetag: **19.06.2008**

(51) Int Cl.:
***C08K 5/09*** $^{(2006.01)}$ ***C08K 5/098*** $^{(2006.01)}$
***C08L 81/06*** $^{(2006.01)}$

(86) Internationale Anmeldenummer:
**PCT/EP2008/057793**

(87) Internationale Veröffentlichungsnummer:
**WO 2009/000741 (31.12.2008 Gazette 2009/01)**

(54) **FORMMASSEN ENTHALTEND POLYARYLETHER MIT VERBESSERTER OBERFLÄCHENQUALITÄT**

MOLDING MATERIALS COMPRISING POLYARYL ETHERS WITH IMPROVED SURFACE QUALITY

MATIÈRES POUR MOULAGE CONTENANT DU POLYARYLÉTHER AVEC DE MEILLEURES PROPRIÉTÉS DE SURFACE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.06.2007 EP 07110844**

(43) Veröffentlichungstag der Anmeldung:
**10.03.2010 Patentblatt 2010/10**

(73) Patentinhaber: **BASF SE**
**67056 Ludwigshafen am Rhein (DE)**

(72) Erfinder:
- **WEBER, Martin**
  **67487 Maikammer (DE)**
- **BLUHM, Rüdiger**
  **67117 Limburgerhof (DE)**
- **MALETZKO, Christian**
  **67122 Altrip (DE)**
- **LANGE, Gerhard**
  **69198 Schriesheim (DE)**
- **ERBES, Jörg**
  **76137 Karlsruhe (DE)**

(74) Vertreter: **Jacobi, Markus Alexander et al**
**Patentanwälte**
**Isenbruck Bösl Hörschler PartG mbB**
**Eastsite One**
**Seckenheimer Landstraße 4**
**68163 Mannheim (DE)**

(56) Entgegenhaltungen:

| | |
|---|---|
| EP-A- 0 382 409 | EP-A1- 0 409 482 |
| WO-A-2006/037773 | DE-A1- 19 839 331 |
| JP-A- H06 200 157 | US-A- 561 333 |
| US-A- 4 175 175 | US-A- 4 289 668 |
| US-A- 4 520 067 | US-A- 4 957 978 |
| US-A- 5 164 466 | US-A- 6 075 100 |
| US-A1- 2003 139 494 | US-A1- 2004 024 287 |

- **ENCYCLOPEDIA OF POLYMER SCIENCE AND TECHNOLOGY, vol. 4, 22 October 2001 (2001-10-22), pages 9-12, DOI: 10.1002/0471440264.PST291**
- **"Wiederholungseinheit", Römp Kompakt Basislexikon Chemie, 1999, page 2926,**
- **"Konstitution & Konstitutionelle Repetiereinheit", Römp Kompakt Basislexikon Chemie, 1998, pages 1272-1273,**
- **"Makromoleküle", Römp Kompakt Basislexikon Chemie, 1999, pages 1431-1432,**
- **BASF: "Anwendungen Sortiment Eigenschaften Verarbeitung", Broschure 'Ultrason E' Polyethersulfon (PES) 'Ultrason S' Polysulfon (PSU),**
- **"Gas Permeation in Polyethersulfone", J. Appl. Polymer Science, vol. 33, 1987, pages 1823-1827,**

EP 2 160 440 B2

## Beschreibung

Kunststoffe aus Polyarylether bzw. mit einer Polyarylether-Komponente sind seit Jahren bekannt und gehören zur Gruppe der Hochleistungsthermoplaste. Sie finden aufgrund ihrer hohen Wärmeformbeständigkeit und Chemikalienbeständigkeit Verwendung in hochbeanspruchten Anwendungen (siehe z. B. G. Blinne et al., Kunststoffe 75, 219 (1985); E.M. Koch, Kunststoffe 80, 1146 (1990); E. Döring, Kunststoffe 80, 1149 (1990)). Aufgrund der hohen Glastemperatur und der damit verbundenen Dimensionsbeständigkeit der Formteile werden Polyarylether auch zur Herstellung von Scheinwerferreflektoren, zum Beispiel im Automobilbau verwendet.

Die vorliegende Erfindung betrifft verbesserte Formmassen, die Polyarylether enthalten und die sich durch hohe Zähigkeit, verbesserte Fließfähigkeit, gute Schmelzestabilität und durch eine hohe Oberflächenqualität auszeichnen.

Die Verwendung von Polyethersulfon als Material zur Herstellung von Scheinwerferreflektoren ist seit langem bekannt. Diese Anwendung stellt besondere Anforderungen bezüglich der Fließfähigkeit und Zähigkeit der thermoplastischen Zusammensetzungen, insbesondere beim Entformen der Bauteile.

Formmassen aus verschiedenen Polyarylethern sind aus der Literatur bekannt.

In EP-A 215 580 werden mischbare, d. h. einphasige Blends aus zwei oder mehr Polyarylenethersulfonen mit wiederkehrenden Einheiten aus den folgenden Bausteinen beschrieben:

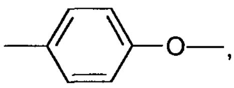,
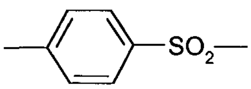 und
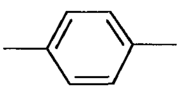.

Diese Blends eignen sich insbesondere für die Herstellung von Leiterplatten.

Aus DE-A 2 917 903 sind Zusammensetzungen zur Herstellung von semipermeablen Membranen bekannt, die durch Mischen von zwei pulverförmigen Polyarylenethersulfonen erhalten werden, wobei das eine im Wesentlichen aus den Struktureinheiten (I)-X und das andere im Wesentlichen aus Struktureinheiten (II)-X besteht.

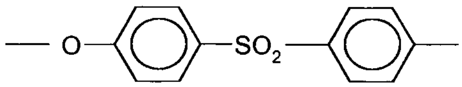

(I)-X

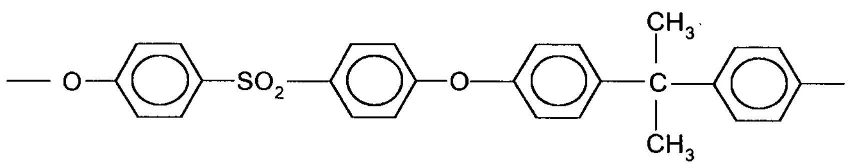

(II)-X.

Aus EP-A 127 852 ist ein Kochgeschirr aus einer Mischung aus Polyarylenethersulfonen mit den nachfolgend genannten, wiederkehrenden Einheiten (III)-X

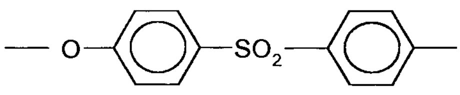 und 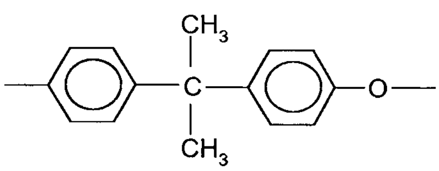

(III)-X

und solchen, die die oben genannten Struktureinheiten (I)-X und (II)-X enthalten, bekannt.

Aus EP-A 663 426 sind ferner Blends bekannt auf Basis eines Copolyarylethers A, bestehend aus 91 bis 97 mol-% Struktureinheiten (I)-X und 3 bis 9 Gew.-% Struktureinheiten (II)-X mit einer dispersen Phase bestehend aus einem Copolyarylether B, welcher 91 bis 97 mol-% Struktureinheiten (II)-X und 3 bis 9 mol-% Struktureinheiten (I)-X aufweist. Diese Blends zeichnen sich durch eine verbesserte Fließfähigkeit, reduzierte Blisterneigung und verbesserte Chemikalienbeständigkeit aus. In US 2003/0139494 werden Formmassen beschrieben, die funktionalisierte Polyethersulfone enthalten.

Für Anwendungen im Bereich der Scheinwerferreflektoren sind die Fließfähigkeit und die Zähigkeit der im Stand der Technik beschriebenen Formmassen jedoch nicht ausreichend.

Aus der Patentanmeldung JP 06-200157 ist die Verwendung von Stearinsäure-Amiden zur Verbesserung der Entformbarkeit und Biegefestigkeit von Polyethersulfon bekannt.

Eine Aufgabe der vorliegenden Erfindung ist es, kostengünstig herstellbare Formmassen mit verbesserter Fließfähigkeit und guter Zähigkeit zur Verfügung zu stellen.

Diese Aufgabe wird gelöst durch die Bereitstellung einer Formmasse, enthaltend die Komponenten A, B und C, sowie gegebenenfalls die weiteren Komponenten D und E, deren Summe insgesamt 100 Gew.-% ergibt, wobei die Formmasse enthält:

A) 42,5 bis 89,85 Gew.-% mindestens eines Polyethersulfons, aufgebaut aus wiederkehrenden Einheiten der Formel (I),

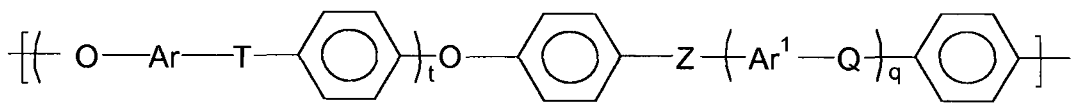

(I)

worin

| | |
|---|---|
| t und q | unabhängig voneinander für 0, 1 oder 2 stehen, |
| Q, T, Z | unabhängig voneinander jeweils eine chemische Bindung oder eine Gruppe, ausgewählt aus -O- und $-SO_2-$ bedeuten, mit der Maßgabe, dass mindestens eine der Gruppen T, Q und Z für-$SO_2$ steht und, wenn t und q für 0 stehen, Z für -$SO_2$ steht, und |
| Ar und $Ar^1$ | unabhängig voneinander jeweils für eine $C_6$-$C_{12}$-Arylengruppe stehen; |

B) 10 bis 57,35 Gew.-% mindestens eines Polysulfons, aufgebaut aus wiederkehrenden Einheiten der Formel (II),

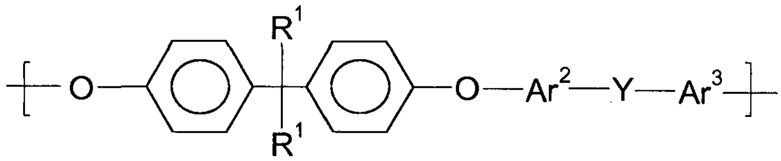

(II),

worin

| | |
|---|---|
| $R^1$ | für H oder $C_1$-$C_4$-Alkyl steht, |
| $Ar^2$ und $Ar^3$ | unabhängig voneinander jeweils für eine $C_6$-$C_{12}$-Arylengruppe stehen, und |
| Y | $-SO_2-$ bedeutet; |

C) 0,1 bis 1,75 Gew.-% an Stearinsäure und/oder Stearaten, sowie gegebenenfalls

D) 0 bis 50 Gew.-% weiterer Zusatzstoffe,

E) 0 bis 30 Gew.-% weiterer Hilfsstoffe.

Die Erfindung betrifft auch eine Formmasse, die enthält:

A) 42,5 bis 89,85 Gew.-% mindestens eines Polyethersulfons, aufgebaut aus wiederkehrenden Einheiten der Formel (I),
B) 10 bis 57,35 Gew.-% mindestens eines Polysulfons, aufgebaut aus wiederkehrenden Einheiten der Formel (II),
C) 0,1 bis 1,75 Gew.-% an Stearinsäure und/oder Stearaten, sowie gegebenenfalls
D) 0 bis 20 Gew.-% weiterer Zusatzstoffe,

E) 0 bis 15 Gew.-% weiterer Hilfsstoffe.

Die Erfindung betrifft ferner eine Formmasse, die enthält:

als Komponente A gerade 42,5 bis 89,85 Gew.-% mindestens eines Polyethersulfons, welches eine Glastemperatur von größer 200° C aufweist. Diese Komponente ist aufgebaut aus wiederkehrenden Einheiten der Formel (I).

Die Komponente B enthält häufig gerade 10 bis 57,35 Gew.-% mindestens eines Polysulfons, welches eine Glastemperatur von 170 bis 195° C, insbesondere 175 bis 190°C, aufweist. Dieses Polymer ist z. B. aufgebaut aus Bisphenol A und Dichlordiphenylsulfon.

Die Erfindung betrifft auch eine Formmasse, die enthält:
als Komponente C gerade 0,1 bis 1,75 Gew.% an Stearinsäure und/oder Stearaten, wobei als Stearate die üblichen Salze der Stearinsäure,
z. B. mit Metallen wie Na, Ca, Mg, Al bevorzugt sind.

Bevorzugt enthält die Formmasse als Komponente C gerade 0,1 bis 0,9 Gew.% an Stearinsäure und/oder Stearaten. Auch eine Kombination von geringen Mengen an Stearinsäure mit geringen Mengen an Stearaten, insbesondere des Aluminiums, sind geeignet. Als Komponente C setzt man gerne gerade 0,1 bis 0,7 Gew.% an Stearinsäure und/oder Aluminiumtristearat ein. Bevorzugt wird auch reine Stearinsäure verwendet.

Die Erfindung betrifft auch eine Formmasse, die enthält:

als Komponente D gerade 1 bis 40 Gew.-% an weiteren Zusatzstoffen aus der Gruppe der Füllstoffe, Verstärkungsstoffe und schlagzähmodifizierte Kautschuke.

Die Erfindung betrifft auch eine Formmasse, die enthält:

als Komponente D gerade 5 bis 40 Gew.-% an faser- und/oder teilchenförmigen Füllstoffen enthält.

Die Erfindung betrifft auch eine Formmasse, die enthält:

als Komponente E gerade 0,1 bis 20 Gew.-% eines oder mehrerer Hilfsstoffe aus der Gruppe der Verarbeitungshilfsmittel, Pigmente, Stabilisatoren und Flammschutzmittel enthält.

Gegenstand der Erfindung ist auch ein Verfahren zur Herstellung von thermoplastischen Formmassen durch Mischen der Komponenten A bis C und gegebenenfalls der Komponenten D und E.

Auch die Verwendung von Formmassen zur Herstellung von Fasern, Folien und Formkörpern ist Gegenstand der Erfindung, wobei die Verwendung von Formmassen z. B. zur Herstellung von Haushaltsartikeln, elektronischen Bauteilen, Haushaltsgeräten, Gartengeräten, medizinisch-technische Geräten, Kfz-Bauteilen und Karosserieteilen erfolgt.

Die Formmassen eignen sich insbesondere zur Herstellung von Scheinwerfern für Kraftfahrzeuge.

Die Erfindung betrifft auch einen Formkörper, Fasern und Folien aus einer Formmasse, beispielsweise ein Gehäuse für einen Scheinwerfer (z. B. für ein Fahrzeug).

Besonders bevorzugt sind solche Formmassen, die zwei Glastemperaturen aufweisen, die sich mindestens um 10 K unterscheiden.

Die erfindungsgemäßen Formmassen weisen verbesserte Fließfähigkeit, bessere Kerbschlagzähigkeit und überraschenderweise auch eine verbesserte Oberflächenqualität auf. Des Weiteren zeigen die erfindungsgemäßen Formmassen eine gute Verarbeitungsstabilität. Die Formmassen enthalten bevorzugt mindestens zwei polymere Phasen und sind opaque Mischungen.

Als Komponente A enthalten die erfindungsgemäßen Formmassen mindestens ein Polyethersulfon. Bevorzugt wird ein Polyethersulfon entsprechend Strukturformel (I) insbesondere mit einer Glastemperatur von über 210° C, z. B. von 225 °C verwendet.

Die erfindungsgemäßen Formmassen enthalten die Komponente A in Mengen von 42,5 bis 89,85 Gew.-% und besonders bevorzugt von 45 bis 84,8 Gew.-%, bezogen auf das Gesamtgewicht der Komponenten A bis E.

Als Komponente A wird erfindungsgemäß ein Polyethersulfon eingesetzt. Es können auch Mischungen aus zwei oder mehreren unterschiedlichen Poly(arylen)ethersulfonen als Komponente A eingesetzt werden.

Die Arylengruppen der Polyarylenethersulfone A können dabei gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert.

Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten, wie Pyridin und Halogenatome. Zu den bevorzugten Substituenten zählen Alkylreste mit bis zu 10 Kohlenstoffatomen, wie Methyl, Ethyl, iso-Propyl, n-Hexyl iso-Hexyl, $C_1$- bis $C_{10}$-Alkoxyreste, wie Methoxy, Ethoxy, n-Propoxy, n-Butoxy, Arylreste mit bis zu 20 Kohlenstoffatomen, wie Phenyl oder Naphthyl, sowie Fluor und Chlor.

Als Komponente A können auch verschiedene Einheiten der Formel (I) statistisch oder in Blöcken verteilt im Polyarylenethersulfon vorliegen.

Die Herstellung erfindungsgemäß brauchbarer Polyethersulfone A kann beispielsweise in Anlehnung an GB 1 152 035 und US 4,870,153 erfolgen. Geeignete Verfahrensbedingungen zur Synthese von Polyarylenethersulfonen sind beispielsweise in EP-A 0 113 112 und EP-A 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls möglich. Beispiele für geeignete Polyarylenethersulfone A sind solche, mit mindestens einer der folgenden wiederkehrenden Struktureinheiten ($I_1$) bis ($I_{13}$):

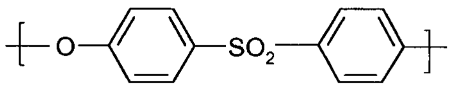

(I1)

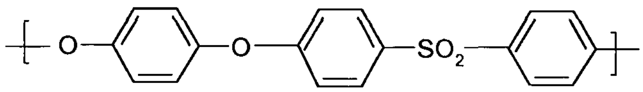

(I3)

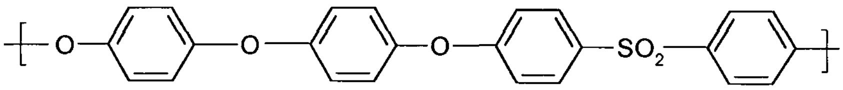

(I4)

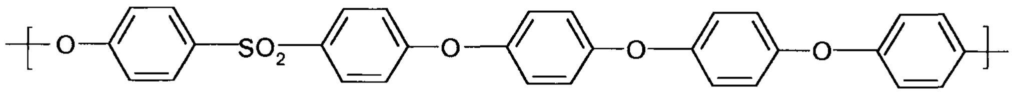

(I6)

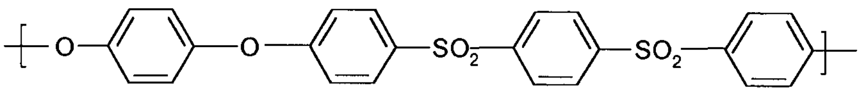

(I7)

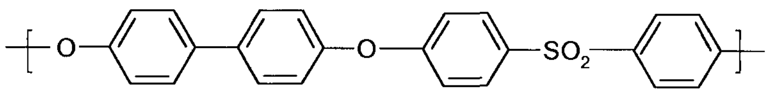

(I8)

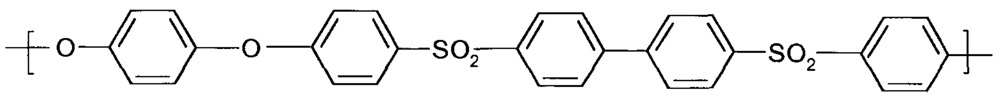

(I9)

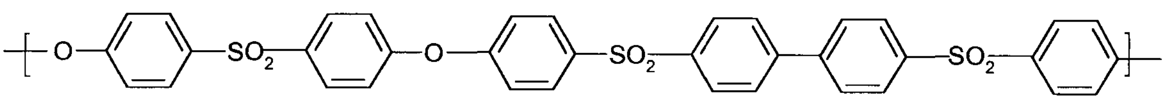

(I13).

Auch die Verwendung eines Polyarylenethersulfons A, enthaltend die Struktureinheit ($I_{15}$), wird beschrieben.

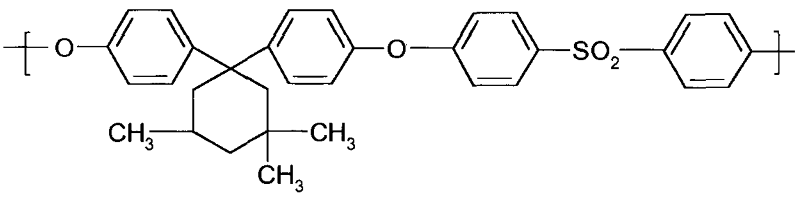

(I15)

Besonders bevorzugt werden Polyarylethersulfone der Formel (I1) verwendet.

Je nach Synthesebedingungen können die Polyarylenethersulfone unterschiedliche Gruppen aufweisen. Diese Gruppen können an Atome der Polymerkette gebunden sein oder als Endgruppen der Polymerkette vorliegen.

Unter den Gruppen sind solche, die sich gegenüber den weiteren Komponenten der thermoplastischen Zusammensetzung inert verhalten und solche, die mit den Komponenten reagieren können.

Zu den inerten Gruppen zählen Halogen-, insbesondere Chlor-, Alkoxy-, vor allem Methoxy- oder Ethoxy-, Aryloxy-, bevorzugt Phenoxy oder Benzyloxygruppen.

Im Allgemeinen weisen die Polyarylenethersulfone mittlere Molekulargewichte $M_n$ (Zahlenmittel) im Bereich von 5000 bis 60000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20 °C bzw. 25 °C gemessen.

Als Komponente B enthalten die erfindungsgemäßen Formmassen ein Polyarylensulfon. Erfindungsgemäß wird ein Polyarylensulfon entsprechend Strukturformel (II) eingesetzt:

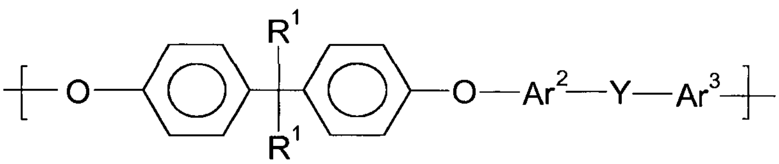

(II),

wobei

| | |
|---|---|
| $R^1$ | für H, $C_1$-$C_4$-Alkyl, steht, |
| $Ar^2$ und $Ar^3$ | unabhängig voneinander jeweils für eine $C_6$-$C_{12}$-Arylengruppe steht, und |
| Y | -$SO_2$- bedeutet. |

Bevorzugt hat das Polyarylensulfon eine Glastemperatur von 180 °C bis 190 °C, insbesondere 187 °C, und leitet sich von Bisphenol A und Dihalogendiphenylsulfon ab.

Die erfindungsgemäßen Formmassen enthalten die Komponente B in Mengen von 10 bis 57,35 und besonders bevorzugt von 15 bis 54,8 Gew.-%, bezogen auf das Gesamtgewicht der Komponenten A bis E.

Im Allgemeinen weisen die Polyarylenethersulfone mittlere Molekulargewichte $M_n$ (Zahlenmittel) im Bereich von 5000 bis 60000 g/mol und relative Viskositäten von 0,20 bis 0,95 dl/g auf. Die relativen Viskositäten werden je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20 °C bzw. 25 °C gemessen.

Als Komponente C enthalten die erfindungsgemäßen Formmassen 0,1 bis 1,75, besonders bevorzugt 0,1 bis 1,5 Gew.-% und insbesondere 0,1 bis 0,9 Gew.-% (bezogen auf die gesamte Formmasse) an Stearinsäure und/oder Stearaten.

Im Prinzip werden auch andere Stearinsäurederivate wie Ester der Stearinsäurebeschrieben.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70 °C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren können auch Stearate als Komponente C verwendet werden. Stearate können entweder durch Umsetzung entsprechender Natriumsalze mit Metallsalzlösungen (zum Beispiel $CaCl_2$, $MgCl_2$, Aluminiumsalzen) oder durch direkte Umsetzung der Fettsäure mit Metallhydroxid hergestellt werden (siehe zum Beispiel Baerlocher Additives,

2005). Bevorzugt wird Aluminiumtristearat verwendet.

Als Komponente D enthalten die erfindungsgemäßen thermoplastischen Formmassen 0 bis 50, vorzugsweise 0 bis 45 und insbesondere 0 bis 40 Gew.-% an Zusatzstoffen, wie Füll-und Verstärkungsstoffe oder schlagzähmodifizierte Kautschuke.

Die Formmassen können auch Hilfsstoffe enthalten, wie zum Beispiel Verarbeitungshilfsmittel, Pigmente, Stabilisatoren oder Mischungen verschiedener Zusätze.

Vorzugsweise sind in den Formmassen 0 bis 45, insbesondere 0 bis 40 Gew.-% faser- oder teilchenförmige Füllstoffe oder Verstärkungsstoffe oder deren Mischungen enthalten. Die Mengenangaben beziehen sich jeweils auf die Gesamtmasse der Komponenten A bis E.

Bevorzugte faserförmige Füll- oder Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte, bevorzugt einer Polyurethanschlichte, und einem Haftvermittler ausgerüstet sein. Im Allgemeinen haben die verwendeten Kohlenstoff- und Glasfasern einen Durchmesser im Bereich von 6 bis 20 $\mu$m.

Die Einarbeitung der Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm. Kohlenstoff- oder Glasfasern können auch in Form von Geweben, Matten oder Glasseidenrovings eingesetzt werden.

Als teilchenförmige Füllstoffe eignen sich amorphe Kieselsäure, Carbonate, wie Magnesiumcarbonat (Kreide), gepulverter Quarz, Glimmer, unterschiedlichste Silikate, wie Tone, Muskovit, Biotit, Suzoit, Zinnmaletit, Talkum, Chlorit, Phlogopit, Feldspat, Calciumsilikate, wie Wollastonit oder Aluminiumsilikate, wie Kaolin, besonders kalzinierter Kaolin.

Nach einer weiteren Ausführungsform werden teilchenförmige Füllstoffe verwendet, von denen mindestens 95 Gew.-%, bevorzugt mindestens 98 Gew.-%, der Teilchen einen Durchmesser (größte Ausdehnung), bestimmt am fertigen Produkt, von weniger als 45 $\mu$m, bevorzugt weniger als 40 $\mu$m, aufweisen und deren so genanntes Aspektverhältnis im Bereich von 1 bis 25, bevorzugt im Bereich von 2 bis 20 liegt, bestimmt am fertigen Produkt.

Die Teilchendurchmesser können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, die weniger als 40 $\mu$m beträgt, kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 $\mu$m und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 $\mu$m und ein Aspektverhältnis von 1,2 bis 20, jeweils bestimmt am fertigen Produkt.

Die erfindungsgemäßen Formmassen können als weitere Komponente E auch Hilfsstoffe, wie Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit-und Entformungsmittel, Farbstoffe und Weichmacher.

Deren Anteil beträgt erfindungsgemäß von 0 bis zu 30, vorzugsweise von 0 bis zu 20 Gew.-%, insbesondere 0 bis 15 Gew.-%, bezogen auf das Gesamtgewicht der Komponenten A bis E. Im Fall, dass es sich bei der Komponente E um Stabilisatoren handelt, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf das Gesamtgewicht von A bis E.

Pigmente und Farbstoffe sind allgemein in Mengen bis zu 6, bevorzugt 0,05 bis 5 und insbesondere 0,1 bis 3 Gew.-%, bezogen auf die Summe von A bis E, enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [$2\,PbCO_3 \cdot Pb(OH)_2$], Llithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz ($Fe_3O_4$), Spinellschwarz [$Cu(Cr,Fe)_2O_4$], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird [siehe hierzu G. Benzing, Pigmente für Anstrichmittel, Expert-Verlag (1988), Seiten 78 ff.].

Zur Einstellung bestimmter Farbtöne können anorganische Buntpigmente, wie Chromoxidgrün oder organische Buntpigmente, wie Azopigmente oder Phthalocyanine erfindungsgemäß eingesetzt werden. Derartige Pigmente sind

allgemein im Handel üblich.

Oxidationsverzögerer und Wärmestabilisatoren, die den thermoplastischen Massen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung A bis F, einsetzbar.

Beispiele für UV-Stabilisatoren sind verschiedene substituierte Resorcine, Salicylate, Benzotriazole und Benophenone, die im Allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearylalkohol, Stearinsäurealkylester und-amide sowie Ester des Pentaerythrits mit langkettigen Fettsäuren. Es können auch Dialkylketone, zum Beispiel Distearylketon, eingesetzt werden.

Als weitere Zusatzstoffe kommen auch so genannte Nukleierungsmittel, wie beispielsweise Talkum, in Betracht.

Die erfindungsgemäßen Formmassen können nach an sich bekannten Verfahren, beispielsweise mittels Extrusion hergestellt werden. Die Formmassen können zum Beispiel hergestellt werden, indem man die Ausgangskomponenten A, B und C, sowie gegebenenfalls D und E in üblichen Mischvorrichtungen, wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die erfindungsgemäßen Formmassen lassen sich vorzugsweise auch dadurch herstellen, dass aus einer Lösung enthaltend die Komponenten A und B in einem Lösungsmittel (L) (wie zum Beispiel N-Methylpyrrolidon) die Komponenten ausgefällt werden und anschließend ggf. extrahiert werden und man erst anschließend mit der Komponente C sowie gegebenenfalls D und E in üblichen Mischvorrichtungen mischt und anschließend extrudiert.

Die Reihenfolge der Mischung der Komponenten kann variiert werden, so können zwei oder gegebenenfalls drei Komponenten vorgemischt werden, es können aber auch alle Komponenten gemeinsam gemischt werden.

Komponenten A und B können auch bereits in der Lösung vorgemischt werden. Der Zusatz der Komponenten C und gegebenenfalls D und E erfolgt über den Zustand der Schmelze.

Um eine möglichst homogene Formmasse zu erhalten, ist eine intensive Durchmischung vorteilhaft. Dazu sind im Allgemeinen mittlere Mischzeiten von 0,2 bis 30 Minuten, insbesondere 1 bis 20 Minuten bei Temperaturen von 280° bis 420°, bevorzugt 290° bis 380 °C, erforderlich.

Die erfindungsgemäßen Formmassen zeichnen sich durch gute Fließfähigkeit, verbesserte Zähigkeit, vor allem Reißdehnung und Kerbschlagzähigkeit und durch eine verbesserte Oberflächenqualität aus. Die erfindungsgemäßen Formmassen eignen sich daher zur Herstellung von Formteilen für Haushaltsartikel, elektrische oder elektronische Bauteile sowie für Formteile für den Fahrzeugsektor.

Die Erfindung wird durch die nachfolgenden Beispiele erläutert.

**Beispiele**

Die Eigenschaften der Formmassen

Die Viskositätszahl der Polyarylethersulfone wird in 1 %-iger Lösung von N-Methylpyrrolidon bei 25 °C bestimmt.

Die Wärmeformbeständigkeit der Proben wurde nach ISO 306 (Vicat B) ermittelt (Belastung 50 N, Temperatursteigerung von 50 K je Stunde, an ISO-Stäben).

Die Kerbschlagzähigkeit der Produkte wurde nach ISO 179 1 eB bestimmt.

Die Reißdehnung der Materialien wurde nach der ISO 527 ermittelt. Die Fließfähigkeit der Produkte wurde durch Messung im Kapillarrheometer bei 370 °C bestimmt.

Die Oberflächenqualität wurde visuell an Platten der Größe 60 auf 60 auf 2 mm bestimmt und nach dem Schulnotensystem zwischen 1 (sehr gut) und 6 (ungenügend) eingeteilt.

Die Schmelzstabilität der Produkte wurde durch Messung der Schmelzviskosität in einem Kapillarrheometer bei 400 °C bestimmt. Dabei wird die Änderung der bei 55 Hz ermittelten Viskosität über einen Zeitraum von 60 Minuten betrachtet.

$$\Delta = \frac{\eta_{60'} - \eta_{5'}}{\eta_{5'}}$$

$\eta_{60'}$ : Viskosität nach 60 min

$\eta_{5'}$ : Viskosität nach 5 min

Komponente A1

Als Polyarylethersulfon wird zum Beispiel Ultrason® E 2010 (der BASF Aktiengesellschaft, charakterisiert durch eine Glastemperatur von 225 °C und eine Viskositätszahl von 55 ml/g) eingesetzt.

Komponente B1

Als Polysulfon wird zum Beispiel Ultrason®S 2010 (der BASF Aktiengesellschaft, charakterisiert durch eine Glastemperatur von 187 °C und eine Viskositätszahl von 63 ml/g) eingesetzt.

Komponente C1

Als Komponente C1 wird handelsübliche Stearinsäure, charakterisiert durch einen Erweichungsbereich von 55 bis 60 °C und eine Säurezahl von 200 bis 212 mg KOH/g eingesetzt.

Komponente C2

Als Komponente C2 wird Aluminiumtristearat eingesetzt. Es wurden auch Versuche mit Calzium- und Magnesiumstearat durchgeführt, wobei sich Aluminiumstearat besonders bewährt hat.

Komponente D

Als Komponente D wird ein feinteiliger Talk verwendet. Das verwendete Produkt zeichnet sich durch $X_{10}$=1,7 µm und $X_{90}$=10,8 µm (ermittelt durch Laserbeugung, wobei das Mineral in einer Suspensionszelle in VE-Wasser / 1 % CV-K8-Tensid-Gemisch homogenisiert wurde, Magnetrührer, Drehzahl 60 $min^{-1}$) aus.

Herstellung der Formmassen

Die Komponenten A1, B1 und C wurden in einem Zweiwellenextruder (ZSK 30 der Fa. Coperion) bei einer Gehäusetemperatur von 350 °C gemischt und granuliert.

Aus den Granulaten wurde durch Spritzguss Probekörper für mechanische Prüfungen hergestellt. Als Massetemperatur wurden 350 °C verwendet, die Werkzeugoberflächentemperatur lag bei 140 °C.

Tabelle 1

| **Versuch** | **V1** | **V2** | **V3** | **V4** | **V5** | **V6** | **V7** | **V8** |
|---|---|---|---|---|---|---|---|---|
| **Komponente A1** | 100 | 80 | 79,8 | 70 | 69,8 | 60 | 59,8 | 99,8 |
| **Komponente B1** | - | 20 | 20 | 30 | 30 | 40 | 40 | - |
| **Komponente C1** | - | - | 0,2 | - | 0,2 | - | 0,2 | 0,2 |
| | | | | | | | | |
| **Vicat B [°C]** | 224 | 220 | 219 | 218 | 218 | 217 | 215 | 223 |
| **Viskosität bei 1000 Hz [Pa*s]** | 335 | 287 | 284 | 263 | 259 | 246 | 245 | 331 |
| **Reißdehnung [%]** | 14,2 | 27,2 | 47 | 28,6 | 51,0 | 28,6 | 45,1 | 16,1 |
| **Schmelzestabililtät** | 1,27 | 1,44 | 1,40 | 1,51 | 1,41 | 1,52 | 1,42 | 1,30 |
| **ISO 179 1eB [kJ/m$^2$]** | 46 | 120 | 150 | 94 | 127 | 78 | 108 | 47 |
| **Oberflächenqualität** | 2 | 3 | 2 | 3 | 2 | 3,5 | 2,5 | 2 |

Tabelle 2

| **Versuch** | **V9** | **V10** | **V11** | **V12** | **V13** | **V14** | **V15** | **V16** |
|---|---|---|---|---|---|---|---|---|
| **Komponente A1** | 75 | 74,95 | 74,9 | 74,8 | 72,5 | 69,8 | 60 | 60 |
| **Komponente B1** | 25 | 25 | 25 | 25 | 25 | 30 | 30 | 30 |

(fortgesetzt)

| Versuch | V9 | V10 | V11 | V12 | V13 | V14 | V15 | V16 |
|---|---|---|---|---|---|---|---|---|
| Komponente C1 | - | 0,05 | 0,1 | 0,2 | 2,5 | - | - | 0,2 |
| Komponente C2 | - | - | - | - | - | 0,2 | - | - |
| Komponente D | - | - | - | - | - | - | 10 | 10 |
| | | | | | | | | |
| Vicat B [°C] | 219 | 219 | 219 | 219 | 214 | 218 | 218 | 218 |
| Viskosität bei 1000 Hz [Pa*s] | 275 | 275 | 273 | 271 | 214 | 259 | 310 | 305 |
| Reißdehnung [%] | 32,0 | 30,4 | 36,0 | 44,5 | 33,4 | 56,5 | 13,5 | 35,2 |
| Schmelzestabililtät | 1,44 | 1,46 | 1,38 | 1,37 | 0,16 | 1,39 | 1,56 | 1,47 |
| ISO 179 1eB [kJ/m²] | 112 | 114 | 145 | 151 | 87 | 165 | 67 | 98 |
| Oberflächenqualität | 3 | 3 | 2 | 2 | 3 | 2 | 3,5 | 2,5 |

## Patentansprüche

1. Thermoplastische Formmasse, enthaltend die Komponenten A, B und C, sowie gegebenenfalls die weiteren Komponenten D und E, deren Summe insgesamt 100 Gew.-% ergibt, wobei die Formmasse enthält:

   A) 42,5 bis 89,85 Gew.-% mindestens eines Polyethersulfons aufgebaut aus wiederkehrenden Einheiten der Formel (I)

   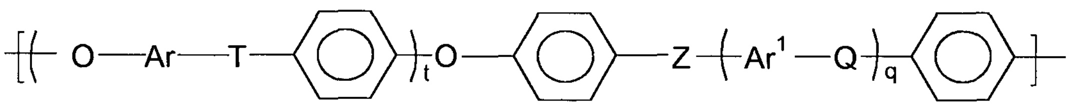

   (I)

   worin

   t und q unabhängig voneinander für 0, 1 oder 2 stehen,
   Q, T, Z unabhängig voneinander jeweils eine chemische Bindung oder eine Gruppe, ausgewählt aus -O- und $-SO_2-$ bedeuten, mit der Maßgabe, dass mindestens eine der Gruppen T, Q und Z für $-SO_2-$ steht und, wenn t und q für 0 stehen, Z für $-SO_2-$steht, und
   Ar und $Ar^1$ unabhängig voneinander jeweils für eine $C_6$-$C_{12}$-Arylengruppe stehen,

   B) 10 bis 57,35 Gew.-% mindestens eines Polysulfons aufgebaut aus wiederkehrenden Einheiten der Formel (II)

   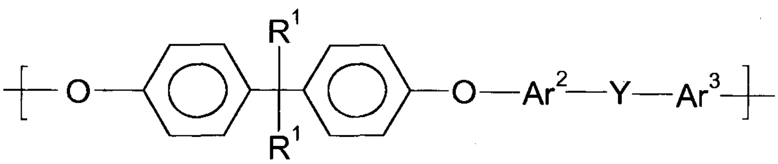

   (II),

   worin

   $R^1$ für H oder $C_1$-$C_4$-Alkyl steht,
   $Ar^2$ und $Ar^3$ unabhängig voneinander jeweils für eine $C_6$-$C_{12}$-Arylengruppe stehen, und
   Y $-SO_2-$ bedeutet,

C) 0,1 bis 1,75 Gew.-% an Stearinsäure und/oder Stearaten, sowie gegebenenfalls
D) 0 bis 50 Gew.-% weiterer Zusatzstoffe,
E) 0 bis 30 Gew.-% weiterer Hilfsstoffe.

**2.** Formmasse gemäß Anspruch 1, **dadurch gekennzeichnet, dass** sie enthält:

A) 42,5 bis 89,85 Gew.-% mindestens eines Polyethersulfons, aufgebaut aus wiederkehrenden Einheiten der Formel (I)
B) 10 bis 57,35 Gew.-% mindestens eines Polysulfons, aufgebaut aus wiederkehrenden Einheiten der Formel (II)
C) 0,1 bis 1,75 Gew.-% an Stearinsäure und/oder Stearaten, sowie gegebenenfalls
D) 0 bis 20 Gew.-% weiterer Zusatzstoffe,
E) 0 bis 15 Gew.-% weiterer Hilfsstoffe.

**3.** Formmasse gemäß einem der Ansprüche 1 oder 2, **dadurch gekennzeichnet, dass** sie als Komponente A mindestens ein Polyethersulfon enthält, welches eine Glastemperatur von größer 210° C aufweist.

**4.** Formmasse gemäß einem der Ansprüche 1 bis 3, **dadurch gekennzeichnet, dass** sie als Komponente B gerade 10 bis 57,35 Gew.-% mindestens eines Polysulfons enthält, welches eine Glastemperatur von 170 bis 195° C aufweist und aufgebaut ist aus Bisphenol A und Dichlordiphenylsulfon.

**5.** Formmasse gemäß einem der Ansprüche 1 bis 4, **dadurch gekennzeichnet, dass** sie als Komponente C gerade 0,1 bis 0,9 Gew.-% an Stearinsäure und/oder Stearaten enthält.

**6.** Formmasse gemäß einem der Ansprüche 1 bis 5, **dadurch gekennzeichnet, dass** sie als Komponente C gerade 0,1 bis 0,7 Gew.-% an Stearinsäure und/oder Aluminiumtristearat enthält.

**7.** Formmasse gemäß einem der Ansprüche 1 bis 6, **dadurch gekennzeichnet, dass** sie als Komponente D gerade 1 bis 40 Gew.-% an weiteren Zusatzstoffen aus der Gruppe der Füllstoffe, Verstärkungsstoffe und schlagzähmodifizierte Kautschuke enthält.

**8.** Formmasse gemäß einem der Ansprüche 1 bis 7, **dadurch gekennzeichnet, dass** sie als Komponente D gerade 5 bis 40 Gew.-% an faser- und/oder teilchenförmigen Füllstoffen enthält.

**9.** Formmasse gemäß einem der Ansprüche 1 bis 8, **dadurch gekennzeichnet, dass** sie als Komponente E gerade 0,1 bis 20 Gew.-% eines oder mehrerer Hilfsstoffe aus der Gruppe der Verarbeitungshilfsmittel, Pigmente, Stabilisatoren und Flammschutzmittel enthält.

**10.** Verfahren zur Herstellung von thermoplastischen Formmassen gemäß einem der Ansprüche 1 bis 9 durch Mischen der Komponenten A bis C und gegebenenfalls der Komponenten D und E.

**11.** Verfahren zur Herstellung gemäß Anspruch 10, **dadurch gekennzeichnet, dass** aus einer Lösung enthaltend die Komponenten A und B in einem Lösungsmittel (L) die Komponenten ausgefällt werden und man erst anschließend mit der Komponente C sowie gegebenenfalls den Komponenten D und E in üblichen Mischvorrichtungen mischt und anschließend extrudiert.

**12.** Verwendung von Formmassen nach einem der Ansprüche 1 bis 9 zur Herstellung von Fasern, Folien und Formkörpern.

**13.** Verwendung von Formmassen nach Anspruch 12 zur Herstellung von Haushaltsartikeln, elektronischen Bauteilen, Haushaltsgeräten, Gartengeräten, medizinisch-technische Geräten, Kfz-Bauteilen und Karosserieteilen.

**14.** Verwendung von Formmassen nach Anspruch 12 zur Herstellung von Scheinwerfern für Kraftfahrzeuge.

**15.** Formkörper, Fasern und Folien aus einer Formmasse gemäß einem der Ansprüche 1 bis 9.

**16.** Formkörper gemäß Anspruch 15, wobei es sich um ein Gehäuse für einen Scheinwerfer handelt.

**Claims**

1. A thermoplastic molding composition, comprising components A, B, and C, and also optionally the further components D and E, the entirety of which gives 100% by weight, where the molding composition comprises:

A) from 42.5 to 89.85% by weight of at least one polyether sulfone composed of repeat units of the formula (I)

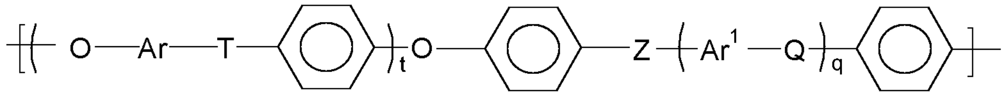

(I)

in which

t and q, independently of one another, are 0, 1, or 2,
each of Q, T, and Z, independently of the others, is a chemical bond or a group selected from -O- and $-SO_2-$, with the proviso that at least one of the groups T, Q, and Z is $-SO_2-$ and, if t and q are 0, Z is $-SO_2-$, and each of Ar and $Ar^1$, independently of the other, is a $C_6$-$C_{12}$-arylene group,

B) from 10 to 57.35% by weight of at least one polysulfone composed of repeat units of the formula (II)

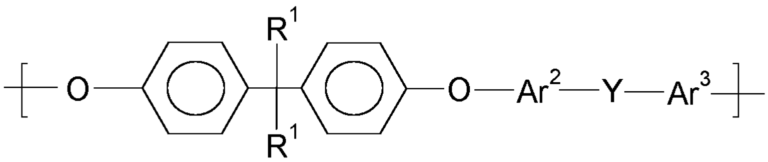

(II),

in which

$R^1$ is H or $C_1$-$C_4$-alkyl,
each of $Ar^2$ and $Ar^3$, independently of the other, is a $C_6$-$C_{12}$-arylene group, and
Y is $-SO_2-$,

C) from 0.1 to 1.75% by weight of stearic acid and/or of stearates, and also optionally
D) from 0 to 50% by weight of further additives,
E) from 0 to 30% by weight of further auxiliaries.

2. The molding composition according to claim 1, which comprises:

A) from 42.5 to 89.85% by weight of at least one polyether sulfone composed of repeat units of the formula (I),
B) from 10 to 57.35% by weight of at least one polysulfone composed of repeat units of the formula (II),
C) from 0.1 to 1.75% by weight of stearic acid and/or of stearates, and also optionally
D) from 0 to 20% by weight of further additives,
E) from 0 to 15% by weight of further auxiliaries.

3. The molding composition according to claim 1 or 2, which comprises, as component A, at least one polyether sulfone whose glass transition temperature is greater than 210°C.

4. The molding composition according to any of claims 1 to 3, which comprises, as component B, specifically from 10 to 57.35% by weight of at least one polysulfone whose glass transition temperature is from 170 to 195°C and which is composed of bisphenol A and dichlorodiphenyl sulfone.

5. The molding composition according to any of claims 1 to 4, which comprises, as component C, specifically from 0.1 to 0.9% by weight of stearic acid and/or of stearates.

**6.** The molding composition according to any of claims 1 to 5, which comprises, as component C, specifically from 0.1 to 0.7% by weight of stearic acid and/or of aluminum tristearate.

**7.** The molding composition according to any of claims 1 to 6, which comprises, as component D, specifically from 1 to 40% by weight of further additives from the group of the fillers, reinforcing materials, and impact-modified rubbers.

**8.** The molding composition according to any of claims 1 to 7, which comprises, as component D, specifically from 5 to 40% by weight of fibrous and/or particulate fillers.

**9.** The molding composition according to any of claims 1 to 8, which comprises, as component E, specifically from 0.1 to 20% by weight of one or more auxiliaries from the group of the processing aids, pigments, stabilizers, and flame retardants.

**10.** A process for the preparation of thermoplastic molding compositions according to any of claims 1 to 9, via mixing of components A to C, and optionally of components D and E.

**11.** The process for preparation according to claim 10, wherein components A and B are precipitated from a solution comprising the components in a solvent (S), and only then does mixing take place with component C and also optionally with components D and E, in conventional mixing apparatuses, the mixture then being extruded.

**12.** The use of molding compositions according to any of claims 1 to 9 for production of fibers, of foils, and of moldings.

**13.** The use of molding compositions according to claim 12 for the production of household items, of electronic components, of household equipment, of garden equipment, of medical-technology equipment, of motor-vehicle components, and of bodywork parts.

**14.** The use of molding compositions according to claim 12 for the production of headlamps for motor vehicles.

**15.** A molding, fiber, or foil composed of a molding composition according to any of claims 1 to 9.

**16.** The molding according to claim 15, where a housing for a headlamp is involved.

## Revendications

**1.** Masse de moulage thermoplastique, contenant les composants A, B et C, ainsi que le cas échéant les autres composants D et E, dont la somme vaut au total 100% en poids, la masse de moulage contenant :

A) 42,5 à 89,85 % en poids d'au moins une polyéthersulfone formée d'unités répétitives de formule (I)

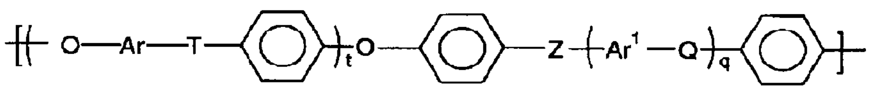

(I)

où

t et q valent, indépendamment l'un de l'autre, 0, 1 ou 2,
Q, T, Z signifient, indépendamment l'un de l'autre, à chaque fois une liaison chimique ou un groupe, choisi parmi -O- et $-SO_2-$, à condition qu'au moins un des groupes T, Q et Z représente $-SO_2-$ et, lorsque t et q valent 0, Z représente $-SO_2-$, et
Ar et $Ar^1$ représentent, à chaque fois indépendamment l'un de l'autre, un groupe $C_6$-$C_{12}$-arylène

B) 10 à 57,35 % en poids d'au moins une polysulfone formée d'unités répétitives de formule (II)

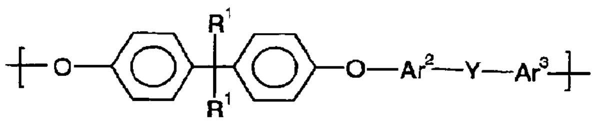

(II),

où

$R^1$ représente H ou $C_1$-$C_4$-alkyle,
$Ar^2$ et $Ar^3$ représentent, à chaque fois indépendamment l'un de l'autre, un groupe $C_6$-$C_{12}$-arylène, et
Y signifie $-SO_2-$,

C) 0,1 à 1,75 % en poids d'acide stéarique et/ou de stéarates, ainsi que le cas échéant
D) 0 à 50 % en poids d'autres additifs,
E) 0 % à 30 % en poids d'autres adjuvants.

**2.** Masse de moulage selon la revendication 1, **caractérisée en ce qu'**elle contient :

A) 42,5 à 89,85 % en poids d'au moins une polyéthersulfone, formée d'unités répétitives de formule (I),
B) 10 à 57,35 % en poids d'au moins une polysulfone formée d'unités répétitives de formule (II)
C) 0,1 à 1,75 % en poids d'acide stéarique et/ou de stéarates, ainsi que le cas échéant
D) 0 à 20 % en poids d'autres additifs,
E) 0 à 15 % en poids d'autres adjuvants.

**3.** Masse de moulage selon l'une quelconque des revendications 1 ou 2, **caractérisée en ce qu'**elle contient comme composant A au moins une polyéthersulfone, qui présente une température de transition vitreuse supérieure à 210 °C.

**4.** Masse de moulage selon l'une quelconque des revendications 1 à 3, **caractérisée en ce qu'**elle contient comme composant B précisément 10 à 57,35 % en poids d'au moins une polysulfone, qui présente une température de transition vitreuse de 170 à 195 °C et qui est constituée de bisphénol A et de dichlorodiphénylsulfone.

**5.** Masse de moulage selon l'une quelconque des revendications 1 à 4, **caractérisée en ce qu'**elle contient comme composant C précisément 0,1 à 0,9 % en poids d'acide stéarique et/ou de stéarates.

**6.** Masse de moulage selon l'une quelconque des revendications 1 à 5, **caractérisée en ce qu'**elle contient comme composant C précisément 0,1 à 0,7 % en poids d'acide stéarique et/ou de tristéarate d'aluminium.

**7.** Masse de moulage selon l'une quelconque des revendications 1 à 6, **caractérisée en ce qu'**elle contient comme composant D précisément 1 à 40% en poids d'autres additifs du groupe des charges, des substances de renforcement et des caoutchoucs à résilience modifiée.

**8.** Masse de moulage selon l'une quelconque des revendications 1 à 7, **caractérisée en ce qu'**elle contient comme composant D précisément 5 à 40 % en poids de charges fibreuses et/ou particulaires.

**9.** Masse de moulage selon l'une quelconque des revendications 1 à 8, **caractérisée en ce qu'**elle contient comme composant E précisément 0,1 à 20 % en poids d'un ou de plusieurs adjuvants du groupe des adjuvants de transformation, des pigments, des stabilisateurs et des agents ignifuges.

**10.** Procédé pour la préparation de masses de moulage thermoplastiques selon l'une quelconque des revendications 1 à 9 par mélange des composants A à C et le cas échéant des composants D et E.

**11.** Procédé pour la préparation selon la revendication 10, **caractérisé en ce qu'**on précipite les composants à partir d'une solution contenant les composants A et B dans un solvant (L) et qu'on ne mélange qu'ensuite avec le composant C ainsi que le cas échéant avec les composants D et E dans des dispositifs de mélange usuels, puis on extrude.

**12.** Utilisation de masses de moulage selon l'une quelconque des revendications 1 à 9 pour la production de fibres, de

feuilles et de corps moulés.

**13.** Utilisation de masses de moulage selon la revendication 12 pour la fabrication d'objets domestiques, de pièces électroniques, d'appareils domestiques, d'appareils de jardin, d'appareils technico-médicaux, de pièces pour véhicules motorisés et de pièces de carrosserie.

**14.** Utilisation de masses de moulage selon la revendication 12 pour la fabrication de phares pour véhicules motorisés.

**15.** Corps façonnés, fibres et feuilles composé(e) d'une masse de moulage selon l'une quelconque des revendications 1 à 9.

**16.** Corps façonnés selon la revendication 15, où il s'agit d'un boîtier pour un phare.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 215580 A
- DE 2917903 A
- EP 127852 A
- EP 663426 A
- US 20030139494 A
- JP 6200157 A
- GB 1152035 A
- US 4870153 A
- EP 0113112 A
- EP 0135130 A


### In der Beschreibung aufgeführte Nicht-Patentliteratur


- **G. BLINNE et al.** *Kunststoffe,* 1985, vol. 75, 219
- **E.M. KOCH.** *Kunststoffe,* 1990, vol. 80, 1146
- **E. DÖRING.** *Kunststoffe,* 1990, vol. 80, 1149
- *Beispiel Baerlocher Additives,* 2005
- **R. GÄCHTER ; H. MÜLLER.** Taschenbuch der Kunststoffadditive. Carl Hanser Verlag, 1983, 494-510
- **G. BENZING.** Pigmente für Anstrichmittel. Expert-Verlag, 1988, 78 ff